# EUROPÄISCHE PATENTSCHRIFT

(11) **EP 1 304 890 B1**
(45) Veröffentlichungstag und Bekanntmachung des Hinweises auf die Patenterteilung: **02.01.2008**
(21) Anmeldenummer: 02102243.9
(22) Anmeldetag: 30.08.2002
(51) Int. Cl.: H04Q 3/00

(54) **Verfahren zur Änderung von Protokollparametern eines Signalisierungsprotokolls**
Method for modifying the protocol parameters of a signaling protocol
Procédé pour la modification des paramètres de protocole d'un protocole de signalisation

(30) Priorität: 26.09.2001 DE 10147494
(43) Veröffentlichungstag der Anmeldung: 23.04.2003
(73) Patentinhaber: NOKIA SIEMENS NETWORKS GMBH & CO. KG, 81541 München (DE)
(72) Erfinder: Hoffmann, Klaus, 81735, München (DE)

(56) Entgegenhaltungen:
- EP-A- 1 026 903
- US-A- 5 953 404

## Beschreibung

Die Erfindung betrifft ein Verfahren zur Änderung von Protokollparametern eines Signalisierungsprotokolls für die Realisierung von Diensten im Rahmen des IN (intelligent network) Konzepts mit Nutzdatenübertragung über ein Paketnetz.

Der Erfindungsgegenstand bezieht sich auf Protokollsoftware im Rahmen von Konzepten für eine effiziente Ausnutzung von Hardware- und Softwareressourcen, die beispielsweise in der Vermittlungstechnik zum Einsatz kommen.

Für Ressourceneffizienz bei der Nutzung von digitalen Kommunikationsnetzen wurde das Konzept des "Intelligent Network", häufig abgekürzt mit IN, entwickelt. Dabei handelt es sich um ein strukturelles Konzept zur flexiblen Dienststeuerung und Dienstentwicklung durch die Nutzung von Software und der durch sie realisierten Funktionalität. International ist IN definiert in den Empfehlungen der Q.1200-Serie, für die die ITU (International Telecommunications Union) verantwortlich zeichnet. Der Grundgedanke bei IN ist die Trennung von Vermittlungsfunktionen und Dienstfunktionen, d.h. die Ressourcen für den Verbindungsaufbau liegen nicht mehr vollständig in der einzelnen Vermittlungsstelle, sondern sind zentralisiert. Der Vorteil dieses Konzepts ist die einfachere Verwaltung und Anpassung dieser zentralisierten Ressourcen. So müssen beispielsweise bei der Einführung neuer Dienste nicht unbedingt alle Vermittlungsstellen einzeln angepasst werden.

In der IN-Architektur sind drei Hierarchieebenen vorgesehen, die Managementebene, die Dienststeuerungsebene und die Vermittlungs- und Transportebene. Die Vermittlungsstellen - meist mit SSP (service switching point) bezeichnet - der untersten Ebene, d.h. der Vermittlungs- und Transportebene, werden durch Steuerstellen - üblicherweise als SCP (service control point) bezeichnet - der Dienststeuerungsebene bei der Realisierung von Diensten gesteuert und gegebenenfalls mit Daten aus zentralisierten Datenbanken versorgt. SSP und SCP sind als gegenständliche Elemente (physical entities) für das IN Konzept in der Q.1205 definiert.

Für IN Anwendungen sind allgemeine Aspekte eines INAP (intelligent network application protocol) Protokolls in der Q.1208 beschrieben. Derzeit werden für IN Anwendungen vielfach INAP Protokolle mit den CS2 (capability set 2) und den CS3 (capability set 3) Funktionsmerkmalen entsprechend den ITU Empfehlungen mit den Nummern Q.122x bzw. Q.123x verwendet.

Weitere Spezifikationen sind notwendig, um Telkommunikationsdienste und -dienstmerkmale im Rahmen des IN Konzepts zu realisieren. So sind beispielsweise für ISDN (integrated services digital network) Anwendungen Signalisierungsfunktionen im Rahmen des ISUP (ISDN user part) in den ITU Schriften Q.761 - Q.764 und Q.766 standardisiert, wobei der ISUP ein Protokoll auf der Basis des Signalling System No. 7 (SS#7) darstellt, das auf eine Trennung der Übertragung von Nutzdaten und Steuerinformation ermöglicht und das in der von der ITU der Q.700 Reihe standardisiert ist. Für ISDN Anwendungen im Rahmen des IN Konzepts wurden von der ITU die Standards Q.1600 und Q.1601 erarbeitet, die die Interaktion von ISUP und INAP CS1 bzw. INAP CS2 regeln.

Im Hinblick auf die wachsende Bedeutung der Übertragung von Nutzdatenübertragung und evtl. Signalisierungsdaten über verschiedene Netze bzw. Träger hinweg, wie es beispielsweise bei IP basierten Anwendungen häufig der Fall ist, werden Signalisierungsprotokolle entwickelt, die unabhängig vom Träger eine bestimmten Satz von Diensten und Dienstmerkmale ermöglichen. Ein wichtiges Beispiel für solch einen Dienst ist die Telefonie über das Internet (VoIP), bei dem verbindungsorientierte Sprachübertragung über verschiedene physikalische Netze ver-- wirklicht werden soll. In dem Entwurf für die Q.1901 der ITU ist ein Signalisierungsprotokoll, das BICC (bearer inedpendent call control) Protokoll beschrieben, mit dem sich unabhängig vom Träger die für das ISDN Netz definierten Dienste und Dienstmerkmale - im folgenden mit ISDN Dienste bzw. Dienstmerkmale bezeichnet - realisieren lassen sollen. Das BICC Protokoll baut auf dem ISUP Protokoll auf. Wie in dem Entwurf für die Q.765.5 beschrieben, kann für den Transport von Träger-bezogenen Informationen mit Hilfe des BICC Protokolls der in der Q.765 dargestellte Transportmechanismus (application transport mechanism) verwendet werden.

Bei der Realisierung von ISDN Diensten und Dienstmerkmalen im Rahmen des IN Konzepts mit Nutzdatenübertragung über ein Paketnetz mit Hilfe eines Träger-unabhängigen Signalisierungsprotokolls wie z.B. BICC CS2 stellt sich das Problem, dass dafür erforderliche oder wünschenswerte Parameteranpassungen nicht unterstützt werden.

Aus der EP 1026903 A1 ist ein Verfahren zur Verwendung von Informationen bekannt, die zusammen mit den zum Aufbau einer Verbindung in einem in einem Intelligenten Netzwerk verwendeten Signalisierungsdaten eines Telekommunikationsnetzwerkes gesendet werden. Dabei wird ein SCP veranlasst einem SSP einen Befehl zu senden, um auf die Verbindungsart bezogene Informationen zu ändern. Im Zuge dieser Änderung der Verbindungsart wird der Verbindungsaufbau nicht beeinträchtigt.

Der Erfindung liegt die Aufgabe zugrunde, ein Verfahren zur Realisierung von Diensten bzw. Dienstmerkmalen im Rahmen des Intelligentes Netzwerk Konzepts mit Nutzdatenübertragung über ein Paketnetz anzugeben, das Schwierigkeiten hinsichtlich nicht unterstützter Parameteranpassungen vermeidet.

Die Aufgabe wird durch ein Verfahren gemäß des Oberbegriffs des unabhängigen Anspruchs durch dessen kennzeichnenden Teil gelöst.

Bei dem Verfahren werden in einem SCP (service control point) Ressourcen für im Rahmen der Dienste bei dem verwendeten Signalisierungsprotokoll vorzunehmende Parameteränderungen vorgesehen. Für die Realisierung eines Dienstes, der die Änderung eines oder mehrerer Protokollparameter im Signalisierungsprotokoll erfordert, wird mit Hilfe von für die Übertragung von für das Signalisierungsprotokoll spezifische Parameter angepassten INAP (intelligent network application part) Prozeduren von einem SSP (service switching point) die Parameteränderung getriggert und vom SCP die Änderung des bzw. der Protokollparameter bei dem SSP bewirkt (Anspruch 1). Dabei kann der SSP prinzipiell auch ein CMN sein (Anspruch 2). Beispielsweise werden dem SCP eine Datenbasis und Software als Ressourcen zur Verfügung gestellt, mit denen sich vom SSP getriggerte Funktionen realisieren lassen. Eine Parameteränderung kann durch die Übermittlung einer Signalisierungsinformation bzw. durch Signalisierungsinformationen von dem SSP an den SCP getriggert bzw. angestoßen werden (Anspruch 3). Dabei kann die Änderung von veränderbaren Einstellungen beim SCP abhängen, z.B. von PIN (Personal Identification Number) Nummern. Es bestimmt sich eventuell erst von der Auswertung der an den SCP übermittelten Signalisierungsinformation, ob, und wenn welche Protokollparameter beim SSP geändert werden. Die übermittelten Signalisierungsfunktionen haben dann einerseits die Funktion von Statusinformation als Input für die Auswertung beim SCP, andererseits wird durch sie die Auswertung und mittelbar über das Resultat der Auswertung die Parameteränderung veranlasst.

Die Erfindung hat den Vorteil, Parameteränderungen zu ermöglichen, die beispielsweise wegen ihres Bezugs zum Paketnetz nicht von dem ISUP (ISDN user part) unterstützt werden.

Bei dem erfindungsgemäßen Verfahren kann die Änderung eines Protokollparameters während eines Verbindungsaufbaus vorgenommen werden. Dabei wird im Rahmen des Verbindungsaufbaus eine IAM (initial address message) an den SSP übermittelt. Für die Realisierung des Dienstes mit Hilfe von für die Übertragung von für das Signalisierungsprotokoll spezifische Parameter angepassten INAP Meldungen und Prozeduren wird von dem SSP die vorzunehmende Parameteränderung bei dem SCP getriggert und vom SCP an den SSP wenigstens eine Information zur Änderung des Protokollparameters übermittelt. Anschlie-βend wird der zu ändernde Protokollparameter mit Hilfe der Information angepasst und die IAM weitergesandt (Anspruch 4).

Dabei kann zur Anpassung der IAM ein von der IAM umfasster APP (application transport parameter) geändert werden, indem mit den für die Parameteränderung angepassten INAP Prozeduren INITIAL DP und CONNECT die vorzunehmende Änderung bei dem SCP getriggert und vom SCP beim SSP durch Änderung des APP der IAM bewirkt wird (Anspruch 5). So können schon bei dem Aufbau einer Verbindung vom ISUP nicht unterstützte Parameter geändert werden. Dabei können zwei INAP Prozeduren, die für die Übermittlung von der Parameteränderung entsprechenden Informationselemente angepasst sind, verwendet werden.

Für Parameteränderungen, die nicht während eines Verbindungsaufbaus vorgenommen werden, kann ein DP (detection point) bei der SSP eingestellt werden (Anspruch 6). Eine Nachricht, die im Rahmen eines Dienstes gesandt wird, für den eine Parameteränderung erforderlich ist, wird bei dem DP detektiert. Mit der für die Parameteränderung angepassten INAP Prozeduren EventReportBCSM und ContinueWithArgument wird die vorzunehmende Parameteränderung bei dem SCP angestoßen und die Parameteränderung beim SSP bewirkt (Anspruch 7). Durch Verwendung eines DPs in Verbindung mit für die Übermittlung von der Parameteränderung entsprechenden Informationselementen angepassten INAP Prozeduren kann aufwandsarm eine Parameteränderung auch außerhalb der Verbindungsaufbauphase vorgenommen werden.

Ein herkömmlich z.B. wegen des Paketnetz-Bezugs der zu übermittelnden Adressinformationen nicht unterstützter Aufbau von Sprachverbindungen kann von dem SCP mit Hilfe einer für Übermittlung der Adressinformationen angepassten INAP Prozedur InitiateCallAttempt veranlasst werden (Anspruch 8).

Weitere vorteilhafte Weiterbildungen des Erfindungsgegenstands sind in den übrigen Unteransprüchen angegeben.

Die Erfindung wird im folgenden anhand einer Figur im Rahmen eines Ausführungsbeispiels dargestellt.

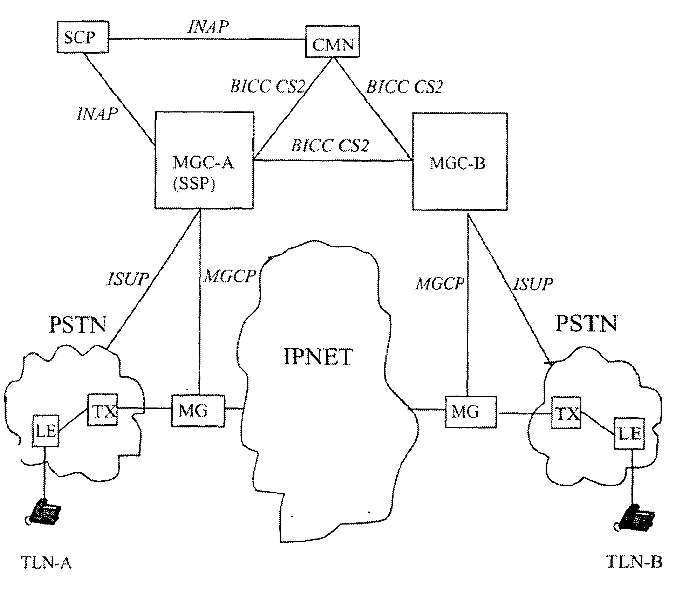

In der Figur ist ein System für ein über ein Paketnetz IPNET, beispielsweise ein auf dem Internet Protokoll basierendes Netz, geleitetes Telefonat dargestellt. Die beteiligten Endgeräte TLN-A und TLN-B sind beide an ein PSTN-Netz (public switched telephone network) angeschlossen. Für die PSTN-Netze wird üblicherweise die Zeitmultiplextechnik - auch mit TDM (time division multiplexing) abgekürzt -, um Daten von verschiedenen Endgeräten bzw. Kanälen zusammenzuführen und über hochkapazitive Verbindungsleitungen - häufig als Trunk bezeichnet - zu übertragen. Für das Ausführungsbeispiel wird angenommen, dass es sich bei dem Endgerät TLN-A um das rufende Endgerät und bei dem Endgerät TLN-B um das gerufene handelt. Nutzdaten und Steuerungsinformationen werden beim Telefonat getrennt geführt, wie beim SS#7 Signalisierungssystem vorgesehen. Die Nutzdaten werden vom Endgerät TLN-A an eine teilnehmernahe Endvermittlungsstelle LE und von dort an eine Transitvermittlungsstelle TX übertragen. Die Transitvermittlungsstelle TX ist mit einem Netzzugangselement MG (MG: für Media Gateway) verbunden, das für die Bearbeitung von TDM Nutzdaten zur Übertragung über ein Paketnetz IPNET vorgesehen ist. Über das Paketnetz IPNET im Rahmen einer Sprachanwendung übertragene Nutzdaten werden empfängerseitig wieder von einem Netzzugangselement MG bearbeitet, um dann über ein PSTN Netz zuerst zu einer Transitvermittlungsstelle TX und schließlich zu einer teilnehmernahen Endvermittlungsstelle LE und dem Teilnehmerendgerät TLN-B übertragen zu werden. Signalisierungsdaten zum Aufbau einer Verbindung werden dagegen zu der Steuereinheit MGC-A (MGC: für Media Gateway Controller) übermittelt, der die A-seitige Netzzugangseinheit MG zugeordnet ist. Zur Steuerung des Verbindungsaufbaues kommuniziert die Steuereinheit MGC-A mit dem A-seitigen Netzzugangseinheit MG und der B-seitigen Steuereinheit MGC-B. Im Rahmen des IN Konzepts entsprechen die Steuereinheiten einem in der Einleitung mit SSP (service switching point) abgekürzten physikalischen Element der Vermittlungsebene. Das ist in der Figur durch die in Klammern gesetzte Abkürzung SSP kenntlich gemacht.

Entsprechend dem IN Konzept werden Steuerfunktionen von einem SCP wahrgenommen. Die Bezugszeichen der für den Austausch von Signalisierungsinformationen verwendeten Protokolle sind in der Figur kursiv geschrieben. Über die PSTN-Netze an die Steuereinheiten MGC-A und MGC-B übermittelte Signalisierungsinformationen werden mit Hilfe des ISUP Protokolls übertragen. Für den Austausch von Informationen zwischen den Steuereinheiten MGC-A und MGC-B und den Netzzugangseinrichtungen MG wird ein evtl. herstellerspezifisch angepasstes Mediagatewaykontrolprotokoll MGCP verwendet. Alternativ dazu kann die Kommunikation zwischen den Steuereinheiten MGC-A und MGC-B und den Netzzugangseinrichtungen MG auch mit Hilfe des H.248 Protokolls erfolgen. Die Signalisierung zwischen den beiden Steuereinheiten MGC-A und MGC-B geschieht mit Hilfe des BICC CS2 Protokolls. Alternativ kann ein herstellerspezifisch angepasstes ISUP Protokoll ISUP+ oder das SIP-T (Session Initiation Protocol) verwendet werden. Für den Austausch von Signalisierungsinformationen zwischen SSP und SCP wird das hiermit erweiterte INAP Protokoll verwendet.

Herkömmlich können Dienste und Dienstmerkmale nicht realisiert werden, die eine Änderung von Paketnetz-relevanten BICC CS2 Parametern erfordern. Für die Änderung der Parameter werden beim SCP Ressourcen bereitgestellt, wie z.B. BICC-spezifische Informationselemente. Im Rahmen des Ausführungsbeispiels werden dem SCP Ressourcen zur Beeinflussung der in der folgenden Tabelle aufgeführten Informationselemente zumindest zur Verfügung gestellt. Die Informationselemente sind in den Entwürfen zu den ITU Standards Q.765.5 und Q.765.5 Ergänzung (Amendment) näher erläutert. Diese Informationselemente können neben anderen vielleicht schon vorhandenen Elementen zusätzlich ausgewertet werden und gegebenenfalls vom SCP verändert, und/oder ganz neu aufgesetzt werden.

| **Name des Informationselemnts (information element)** |
|---|
| Application Transport Instruction Indicator (ATII) |
| Action Indicator |
| Backbone Network Connection Identifier |
| Interworking Function Address |
| Codec List |
| Single Codec |
| BAT Compatibility Report |
| Bearer Network Connection Characteristics |
| Bearer Control Information |
| Bearer Control Tunnelling |
| Bearer Control Unit Identifier |
| Signal |
| Bearer Redirection Capability |
| Bearer Redirection Indicators |
| Signal Type |
| Duration |

Die INAP Prozeduren INITIAL DP, CONNECT, InitialteCallAttempt, EventReportBCSM und ContinueWithArgument - beschrieben in dem ITU-Standard Q.1224 - werden um die den Informationselementen entsprechenden Parameter erweitert.

Wie in der Q.1901 beschrieben, kann bei der Verwendung des BICC CS2 optional mit Codec-Listen gearbeitet werden. Im folgenden wird beispielhaft eine erfindungsgemäße Parameteranpassung für anhand des Informationselements Codec-Liste bzw. Codec List veranschaulicht. In den ITU Veröffentlichungen Q.762 und Q.763 sowie den Entwürfen zu Q.763 (Addendum) und Q.765 ist aufgezeigt, dass beim ISUP und dem auf dem ISUP aufbauenden BICC der Verbindungsaufbau mit Hilfe einer Verbindungsaufbaunachricht IAM (initial address message), die ein Parameterfeld APP (application transport parameter) umfasst, initiiert wird.

Bei einem mit einer IAM eingeleiteten Verbindungsaufbau konstituiert die Codec-Liste ein Informationselement des APP. Erfindungsgemäß steht ein Informationsinhalt zur Beeinflussung bzw. Änderung der gewünschten Codec-Liste bei dem SCP zur Verfügung. Wenn die IAM des ISUP bei der Steuereinheit MGC-A ankommt, wird die erfindungsgemäß erweiterte INAP Prozedur INITIAL DP verwendet, um dem SCP zu signalisieren, dass ein Verbindungsaufbau gewünscht wird und die Codec-Liste zur Verfügung steht. Vom SCP wird daraufhin mit der erfindungsgemäß angepassten INAP Prozedur CONNECT der Verbindungsaufbau fortgesetzt und aus Sicht der SCP Logik zielführende Informationselement bzw. die zielführenden Informationselemente übergeben. Beispielsweise könnte der SCP nun die Liste der CODECs verkleinert haben, so dass für den Verbindungsaufbau nicht mehr alle ursprünglichen CODECs verwendet werden können. Im Rahmen des IN Konzepts können auf der Vermittlungsebene für den Austausch von Steuerinformationen zwischen Steuerungs- und Vermittlungsebene Erkennungspunkte gesetzt bzw. definiert werden (siehe Q.1224). Diese Erkennungspunkte werden in der IN Terminologie mit DP (detection point) abgekürzt. Bei einem DP können Signalisierungsinformationen, die eine SCP-SSP Interaktion erfordern, detektiert werden und ein Informationsaustausch zwischen SCP und SSP zur Verbindungs- bzw. Dienststeuerung ausgelöst werden. Wenn DPs gesetzt sind, kann auch mit den INAP Prozeduren EventReportBCSM (BCSM: Basic Call State Model) und ContinueWithArgument, die erfindungsgemäß erweitert wurden, eine notwendige Parameteranpassung bzw. -einstellung bei dem SCP angestoßen werden (Event ReportBCSM) und das gewünschte Informationselement, beispielsweise eine Codec-Liste übergeben werden (ContineWithArgument). Um z.B. auch Weckrufe IN-spezifisch steuern zu können, wird InitiateCallAttempt auch entsprechend erweitert. Durch die Prozedur InitiateCallAttempt wird vom SCF an einen SSF ein Steuerbefehl zur Aufbau eines Telefonats mit einem Endgerät und die Endgerät-spezifischen Adressinformationen übermittelt. Um Paketnetz-spezifische Adressinformationen wie z.B. IP-Adressen übermitteln zu können, ist für InitiateCallAttempt eine erfindungsgemäße Erweiterung erforderlich.

Das BICC Protokoll erlaubt optional die Verwendung von physikalischen Elementen zur Rufanpassung, die mit CMN (Call Mediation Node), die Prozeduren für assoziierte Dienst-Vermittlungsstellen - in den ITU-Standards mit SN (service node) bezeichnet - wahrnehmen (siehe Q.1901 und für eine Zusammenfassung der IN-relevanten Begriffe Q.1290). Alternativ kann der APP der IAM auch in einer der Steuereinheit MGC-A nachgeschalteten CMN (call mediation node), das durch den SCP gesteuert wird, geändert werden. Bei einem entsprechend der Figur vorgenommenen Verbindungsaufbau würde der IAM dann von der Steuereinheit MGC-A an das CMN übertragen, dort geändert und an das MGC-B weiterübertragen werden.

Das erfindungsgemäße Verfahren kann auch in anderen Konstellationen als in der Figur dargestellt zur Anwendung kommen. Beispielsweise können SCP und SSP in Rahmen einer Anordnung realisiert sein, wobei die entsprechenden Funktionen durch die Schaltungslogik und die Software der Anordnung realisiert ist. In diesem Zusammenhang wird in der Fachwelt häufig der Begriff integrated service logic benutzt. Entsprechend können auch die Steuereinheiten MGC-A und MGC-B zusammenfallen oder die Dienstvermittlungsstelle die Funktionen der DienstVermittlungsstelle CMN räumlich zusammen mit einer der Steuereinheiten MGC-A oder MGC-B realisiert sein.

Teilnehmerseitig kann anstelle des Zugangs über ein PSTN-Netz ein sogenanntes residential gateway, d.h. ein Zugangseinrichtung im Zuständigkeitsbereich des Teilnehmers verwendet werden, oder ein teilnehmerseitiges Endgerät sprachbasierte Paketnetzdienste unterstützen (beispielsweise mit Hilfe des H.323 oder des SIP Protokolls).

## Patentansprüche

1. Verfahren zur Änderung von Protokollparametern eines Signalisierungsprotokolls für die Realisierung von Diensten im Rahmen des Konzeptes des intelligenten Netzwerkes, IN genannt, mit Nutzdatenübertragung über ein Paketnetz, bei dem
- in einem Dienst-Kontrollpunkt, SCP genannt, Ressourcen für im Rahmen der Dienste bei dem verwendeten Signalisierungsprotokoll vorzunehmende Parameteränderungen bereitgestellt werden, und
- für die Realisierung eines Dienstes, bei dem ein oder mehrere Protokollparameter im Signalisierungsprotokoll geändert werden, mit Hilfe von für die Übertragung von für das Signalisierungsprotokoll spezifische Parameter angepassten IN-Anwendungsprotokollprozeduren, INAP Prozeduren genannt, von einem Dienst-Schaltungspunkt, SSP genannt, die Parameteränderung angestoßen wird und vom SCP die Änderung des bzw. der Protokollparameter bei dem SSP bewirkt wird.
**dadurch gekennzeichnet,**
- **dass** die Änderung zumindest eines Protokollparameters während eines Verbindungsaufbaus vorgenommen wird,
- **dass** im Rahmen des Verbindungsaufbaus eine Anfangsadressnachricht, IAM genannt, an den SSP übermittelt wird,
- **dass** für die Realisierung des Dienstes mit Hilfe von für die Übertragung von für das Signalisierungsprotokoll spezifische Parameter angepassten INAP Prozeduren von dem SSP die Parameteränderung angestoßen wird und vom SCP an den SSP mindestens eine Information für die Änderung des Protokollparameters übermittelt wird, und
- **dass** der zu ändernde Protokollparameter mit Hilfe des Informationselements angepasst und die IAM weitergesandt wird.

2. Verfahren nach Anspruch 1,
**dadurch gekennzeichnet,**
**dass** die Funktionen des SSP in einem Rufvermittlungskonten, CMN genannt, realisiert werden.

3. Verfahren nach Anspruch 1 oder 2,
**dadurch gekennzeichnet,**
**dass** vom SSP die Parameteränderung durch die Übermittlung einer oder mehrerer Signalisierungsinformationen an den SCP angestoßen wird.

4. Verfahren nach einem der vorhergehenden Ansprüche,
**dadurch gekennzeichnet,**
- **dass** zur Anpassung der IAM ein von der IAM umfasster Anwendungstransportparameter, APP genannt, geändert wird,
- **dass** die vorzunehmende Änderung mit einer für die Parameteränderung angepassten INAP Prozedur INITIAL DP bei dem SCP angestoßen wird,
- **dass** mit einer für die Parameteränderung angepassten INAP Prozedur CONNECT von dem SCP bei dem SSP eine Änderung des APP der IAM bewirkt wird.

5. Verfahren nach einem der vorhergehenden Ansprüche,
**dadurch gekennzeichnet,**
**dass** ein Detektionspunkt, DP genannt, zur Änderung von Protokollparametern bei der SSP realisiert wird.

6. Verfahren nach Anspruch 5,
**dadurch gekennzeichnet,**
**dass** eine Nachricht, die im Rahmen eines Dienstes gesandt wird, für den eine Parameteränderung erforderlich ist, bei dem DP detektiert wird,
- **dass** mit einer für die Parameteränderung angepassten INAP Prozedur EventReportBCSM an den SCP die vorzunehmende Parameteränderung getriggert wird, und
- **dass** vom SCP mit einer für die Parameteränderung angepassten INAP Prozedur ContinueWithArgument die Parameteränderung beim SSP bewirkt wird.

7. Verfahren nach einem der vorhergehenden Ansprüche,
**dadurch gekennzeichnet,**
**dass** von dem SCP mit Hilfe einer für die Parameteränderung angepassten INAP Prozedur InitiateCallAttempt bei dem SSP Adressinformationen für den Aufbau einer Sprachverbindung übermittelt und der Aufbau der Sprachverbindung veranlasst wird.

8. Verfahren nach einem der vorhergehenden Ansprüche,
**dadurch gekennzeichnet,**
**dass** als Signalisierungsprotokoll das Träger-unabhängige Rufprotokoll, BICC genannt, das Sitzungsaufbau-Protokoll, SIP-T genannt, oder ein für Paketnetzübertragung von Nutzdaten angepasstes ISDN Anwenderteil-Protokoll, ISUP genannt, verwendet wird.

9. Verfahren nach einem der vorhergehenden Ansprüche,
**dadurch gekennzeichnet,**
**dass** es sich bei dem Paketnetz um ein auf dem Internet Protokoll basierendes oder ein auf der asynchronen Transfertechnik, ATM Technik genannt, basierendes Netz handelt.

10. Verfahren nach einem der vorhergehenden Ansprüche,
**dadurch gekennzeichnet,**
**dass** beim SCP Ressourcen zur Beeinflussung zumindest eines der folgenden Tabelle aufgeführten BICC spezifischen Informationselemente bereitgestellt wird:
| **Name des Informationselements** |
|---|
| Application Transport Instruction Indicator (ATII) |
| Action Indicator |
| Backbone Network Connection Identifier |
| Interworking Function Address |
| Codec List |
| Single Codec |
| BAT Compatibility Report |
| Bearer Network Connection Characteristics |
| Bearer Control Information |
| Bearer Control Tunnelling |
| Bearer Control Unit Identifier |
| Signal |
| Bearer Redirection Capability |
| Bearer Redirection Indicators |
| Signal Type |
| Duration |

11. Verfahren nach Anspruch 10,
**dadurch gekennzeichnet,**
**dass** zumindest eine der INAP Prozeduren INITIAL DP, CONNECT, InitiateCall Attempt, EventReportBCSM und ContinueWithArgument für die Änderung zumindest eines der in der Tabelle angeführten Informationselemente angepasst werden.

12. Verfahren nach einem der vorhergehenden Ansprüche,
**dadurch gekennzeichnet,**
**dass** die Funktionen von SSP und SCP in einer physikalischen Einheit realisiert sind.

## Claims

1. Method for changing protocol parameters of a signalling protocol in order to implement services in the context of the intelligent network concept, known as IN, with user data transmission via a packet network wherein
- resources are provided in a service control point, known as SCP, for the parameter changes in the signalling protocol used that are to be carried out in the context of the services, and
- in order to implement a service in which one or a plurality of protocol parameters in the signalling protocol are changed with the aid of IN application protocol procedures, known as INAP procedures, adapted for the transmission of specific parameters for the signalling protocol, the parameter change is initiated by a service switching point, known as an SSP, and the change in the protocol parameter or parameters is effected in the SSP by the SCP,
**characterised in that**,
- a change in at least one protocol parameter is effected during a connection set-up,
- in the context of the connection set-up, an initial address message, known as an IAM, is transmitted to the SSP,
- in order to implement the service with the aid of INAP procedures adapted for the transmission of specific parameters for the signalling protocol, the parameter change is initiated by the SSP, and at least one information element for changing the protocol parameter is transmitted by the SCP to the SSP, and
- the protocol parameter that is to be changed is adapted with the aid of the information element and the IAM is forwarded.

2. Method according to claim 1, **characterised in that**
the functions of the SSP are implemented in a call mediation node, known as a CMN.

3. Method according to claim 1 or 2, **characterised in that** the parameter change is initiated by the SSP, through the transmission of one or a plurality of signalling information elements to the SCP.

4. Method according to any of the previous claims,
**characterised in that**
- for the adaptation of the IAM, an application transport parameter included in the IAM, known as APP, is changed,
- the change that is to be carried out is initiated in the SCP with an INAP INITIAL DP procedure adapted for the parameter change,
- a change in the APP of the IAM is effected with an INAP CONNECT procedure adapted for the parameter change.

5. Method according to any of the previous claims,
**characterised in that** a detection point, known as a DP, is set in the SSP in order to change the protocol parameters.

6. Method according to claim 5, **characterised in that**
a message that is transmitted in the context of a service for which a parameter change is required is detected at the DP,
- the parameter change that is to be carried out is triggered by an INAP EventReportBCSM procedure adapted for the parameter change transmitted to the SCP, and
- the parameter change is effected by the SCP in the SSP using an INAP procedure that is adapted for the parameter change.

7. Method according to any of the previous claims,
**characterised in that** address information for the dial-up of a voice-link is transmitted by the SCP with the aid of an INAP InitiateCallAttempt procedure adapted for the parameter change and the dial-up of the voice link is initiated.

8. Method according to any of the previous claims,
**characterised in that**, for the signalling protocol the bearer-independent call protocol, known as BICC, the session initiation protocol for telephones, known as SIT-P, or an ISDN-user part protocol adapted for the packet network transfer of user data, known as ISUP, is used as the signalling protocol.

9. Method according to any of the previous claims,
**characterised in that** the packet network is a network based on the Internet protocol or a network based on asynchronous transport technology, known as ATM technology.

10. Method according to any of the previous claims,
**characterised in that** resources are provided in the SCP to influence at least one of the BICC-specific information elements listed in the following table:
| **Name of information element** |
|---|
| Application Transport Instruction Indicator (ATII) |
| Action Indicator |
| Backbone Network Connection Identifier |
| Interworking Function Address |
| Codec List |
| Single Codec |
| BAT Compatibility Report |
| Bearer Network Connection Characteristics |
| Bearer Control Information |
| Bearer Control Tunnelling |
| Bearer Control Unit Identifier |
| Signal |
| Bearer Redirection Capability |
| Bearer Redirection Indicators |
| Signal Type |
| Duration |

11. Method according to claim 10,
**characterised in that** at least one of the INAP procedures INITIAL DP, CONNECT, InitiateCallAttempt, EventReportBCSM and Continuewith Argument is adapted for the changing of at least one of the information elements listed in the table.

12. Method according to any of the previous claims,
**characterised in that** the SSP and SCP functions are effected in a physical entity.

## Revendications

1. Procédé de modification de paramètres de protocole d'un protocole de signalisation pour la réalisation de services dans le cadre du concept du réseau intelligent, appelé IN, avec transmission de données utiles par l'intermédiaire d'un réseau de paquets, dans lequel
- dans un point de contrôle de service, appelé SCP, des ressources sont fournies pour des modifications de paramètres à exécuter dans le protocole de signalisation utilisé dans le cadre des services, et dans lequel
- pour la réalisation d'un service, dans lequel un ou plusieurs paramètres de protocole sont modifiés dans le protocole de signalisation, la modification de paramètres est incitée par un point de commutation de service, appelé SSP, à l'aide de procédures de protocole d'application IN, appelées procédures INAP, adaptées pour la transmission de paramètres spécifiques au protocole de signalisation, et dans lequel la modification du paramètre resp. des paramètres de protocole est causée par le SCP dans le SSP,
**caractérisé**
- **en ce que** la modification d'au moins un paramètre de protocole est exécutée pendant un établissement de liaison,
- **en ce que**, dans le cadre de l'établissement de liaison, un message d'adresse initiale, appelé IAM, est transmis au SSP,
- **en ce que** pour la réalisation du service, la modification de paramètres est incitée par le SSP à l'aide de procédures INAP adaptées pour la transmission de paramètres spécifiques au protocole de signalisation et en ce qu'au moins une information est transmise au SSP par le SCP pour la modification du paramètre de protocole, et
- **en ce que** le paramètre de protocole à modifier est adapté à l'aide de l'élément d'information et est transféré à l'IAM.

2. Procédé selon la revendication 1,
**caractérisé**
**en ce que** les fonctions du SSP sont réalisées dans un noeud de commutation d'appels, appelé CMN.

3. Procédé selon la revendication 1 ou 2,
**caractérisé**
**en ce que** la modification de paramètre est incitée par le SSP par la transmission d'une ou de plusieurs informations de signalisation au SCP.

4. Procédé selon l'une quelconque des revendications précédentes,
**caractérisé**
- **en ce que**, pour l'adaptation de 1' IAM, un paramètre de transport d'application, appelé APP, contenu par l'IAM est modifié,
- **en ce que** la modification à exécuter est incitée dans le SCP à l'aide d'une procédure INAP INITIAL DP adaptée pour la modification de paramètre,
- **en ce qu'**à l'aide d'une procédure INAP CONNECT adaptée pour la modification de paramètre, une modification de l'APP de l'IAM est causée par le SCP dans le SSP.

5. Procédé selon l'une quelconque des revendications précédentes,
**caractérisé**
**en ce qu'**un point de détection, appelé DP, est réalisé dans le SSP pour modifier des paramètres de protocole.

6. Procédé selon la revendication 5,
**caractérisé**
**en ce qu'**un message, qui est émis dans le cadre d'un service pour lequel une modification de paramètre est nécessaire, est détecté dans le DP,
- **en ce qu'**à l'aide d'une procédure INAP EventReportBCSM adaptée pour la modification de paramètre, la modification de paramètre est déclenchée sur le SCP, et
- **en ce que** la modification de paramètre est causée dans le SSP par le SCP à l'aide d'une procédure INAP ContinueWithArgument adaptée pour la modification de paramètre.

7. Procédé selon l'une quelconque des revendications précédentes,
**caractérisé**
**en ce que** des informations d'adresse sont transmises dans le SSP par le SCP à l'aide d'une procédure INAP InitiateCallAttempt adaptée pour la modification de paramètre pour l'établissement d'une liaison vocale et en ce que l'établissement de la liaison vocale est ordonné.

8. Procédé selon l'une quelconque des revendications précédentes,
**caractérisé**
**en ce que** l'on utilise, en tant que protocole de signalisation, le protocole d'appel indépendant du support, appelé BICC, le protocole d'établissement de session, appelé SIP-T, ou un protocole de partie usager ISDN, adapté pour la transmission de réseau de paquets de données utiles, appelé ISUP.

9. Procédé selon l'une quelconque des revendications précédentes,
**caractérisé**
**en ce que** le réseau de paquets est un réseau basé sur le protocole Internet ou un réseau basé sur la technique de transfert asynchrone, appelée technique ATM.

10. Procédé selon l'une quelconque des revendications précédentes,
**caractérisé**
**en ce que** des ressources destinées à influencer au moins un des éléments d'information spécifiques BICC mentionnés dans le tableau ci-dessous sont fournies dans le SCP :
| **Nom de l'élément d'information** |
|---|
| Application Transport Instruction Indicator (ATII) |
| Action Indicator |
| Backbone Network Connection Identifier |
| Interworking Function Address |
| Codec List |
| Single Codec |
| BAT Compatibility Report |
| Bearer Network Connection Characteristics |
| Bearer Control Information |
| Bearer Control Tunnelling |
| Bearer Control Unit Identifier |
| Signal |
| Bearer Redirection Capability |
| Bearer Redirection Indicators |
| Signal Type |
| Duration |

11. Procédé selon la revendication 10,
**caractérisé**
**en ce qu'**au moins une des procédures INAP INTIAL DP, CONNECT, InitiateCallAttempt, EventReportBCSM et ContinueWithArgument
est adaptée pour la modification d'au moins un élément d'information mentionné dans le tableau.

12. Procédé selon l'une quelconque des revendications précédentes,
**caractérisé**
**en ce que** les fonctions du SSP et du SCP sont réalisées dans une unité physique.
